# EUROPEAN PATENT SPECIFICATION

(11) **EP 0 621 237 B1**
(45) Date of publication and mention of the grant of the patent: **11.10.2000**
(21) Application number: 94106018.8
(22) Date of filing: 18.04.1994
(51) Int. Cl.: C02F 1/32

(54) **Method and apparatus for purification of rinsing fluids from the graphic industries**
Verfahren und Vorrichtung zur Reinigung von Spülflüssigkeiten der graphischen Industrie
Procédé et dispositif pour la purification des fluides de ringage de l'industrie graphique

(30) Priority: 19.04.1993 DK 43593
(43) Date of publication of application: 26.10.1994
(73) Proprietor: SCAN GRAPH ApS, DK-9560 Hadsund (DK)
(72) Inventor: Eltong Kurt, Dk-9560 Hadsund (DK)
(74) Representative: Kyed, Iver

(56) References cited:
- EP-A- 0 316 687
- CA-A- 2 044 107
- DE-A- 3 032 996
- DE-A- 4 028 529
- US-A- 5 026 477
- US-A- 5 178 755

## Description

The present invention relates to a method of purifying rinsing fluids used in graphic production, in particular fluids from developing apparatuses polluted by particles of solid matter such as silver residue from the films that have been developed and biological particles such as algae and bacteria.

Following ever stricter requirements by the authorities concerning the outlet of waste water a need is created for the possibilities of purifying e.g. waste water or other polluted fluid of several noxious substances and a need for purifying the polluted fluid more thoroughly in order to reduce the amount of noxious substances in the fluid being discharged to the receiver.

In the graphic industries it is particularly the rinsing fluid which constitutes a source of pollution when discharged to the receiver. The rinsing fluid is used in the last phase of film development after the film has been taken through the developer and the fixative. The polluting substances are primarily constituted by silver residue from the films that have been developed, gelatine, and algae and bacteria. Besides, the pH of the rinsing fluid is critical for the outlet e.g. into a sewer.

In Denmark the requirements, e.g. of the environmental authorities of Copenhagen, stipulate that the outlet of rinsing fluid into sewers in connection with film development may as a maximum contain 0.5 mg of silver per litre of fluid, that the maximum outlet is 120 m³ of waste water per day, and that this waste water must have a pH in the interval 6.0 - 9.0. As it appears, not only requirements on the contents of noxious substances in the waste water are made but also the amount of waste being discharges is stipulated.

Thus it is the object of the present invention to disclose a method and an apparatus which are sufficiently capable of removing the noxious substances from the waste water before it is discharged to the receiver, and which will at the same time ensure that the fluid may be reused a certain number of times before final discharge so that the maximum amount of fluid permitted for discharge is not exceeded.

This object is achieved by a method which is characterized in that any such particles in particular silver is precipitated from the fluid in a first reception tank using horizontal plates, whereafter the fluid is successively pumped through a filter unit comprising at least one first mechanical filter and at least one second filter, said first filter being rougher than the second one, and a filter with ultraviolet light, which is arranged between the first reception tank and a second reception tank, that the fluid is circulated between said two tanks and that part of the circulating fluid is circulated to the rinsing apparatus from the second reception tank.

An apparatus for carrying out the method is characterized in that a pump, a first and a second mechanical filter, and a filter with ultraviolet light, are inserted in the pipe connection and further comprising horizontal plates as silver precipitation means in the first reception tank and means for circulating part of the fluid from the second reception tank to the first reception tank.

An apparatus of this type has proven to be particularly useful for complying with the minimum requirements which are stipulated for the discharge of waste water, e.g. in Copenhagen. Furthermore, the amount of fluid used for rinsing the graphic material has been reduced considerably. With an apparatus of the above-mentioned type the waste water consumption has been reduced in some cases to less than ½% of the consumption achieved if no waste water purification is performed,

The use of mechanical filters with subsequent use of a filter with ultraviolet light (UV filter) has proven to have a positive effect as the presence of algae and bacteria in the rinsing fluid is reduced considerably. This means that the rinsing fluid may be used more times than previously, which in turn means that the total amount of fluid used is reduced corresponding to the reduction of algae and bacteria in the fluid.

A precondition for using mechanical filters is that the apparatus is provided with a pump having a certain capacity. The pump is preferably situated in the pipe connection between the first and the second reception tank, but it may be placed anywhere in the piping passed by the rinsing fluid. Also the mechanical filters and the UV filter are situated in the pipe connection between the first and the second reception tank. In order to obtain a satisfactory purification of the rinsing fluid it is necessary that the mechanical filters have a very small pore size. This requires the pump to have a sufficient capacity to press the fluid through these filters even if they have been used for some time and therefore to some degree are clogged up.

After passage of these filters the microorganisms, if any, which are not stopped by the mechanical filters will be taken to the UV filter. This UV filter must have a capacity which will ensure that all the micro-organisms which are led through it will not survive. The micro-organisms destructed in the UV filter will be sedimented in the second reception tank. The UV filter will then ensure that no more micro-organisms are formed and that they will not grow.

In order to precipitate any silver in the rinsing fluid, the first reception tank, and possibly the second reception tank, are provided with horizontal, preferably aluminium, plates. The aluminium plates, preferably two, are positioned horizontally in the tank with a given distance between them. The aluminium plates will preferably be positioned with the space between them in the same level as the level at which the rinsing fluid is led into the tank. By means of this method any silver in the fluid will be deposited on the aluminium plates when the fluid is flushed over their surfaces.

After the rinsing fluid has been purified, part of the fluid is returned to the developing apparatus while the rest of the fluid is returned to the rinsing process via an overflow in the second reception tank. Immediately before the rinsing fluid exceeds one or several limits, eg. those stipulated by the authorities, the fluid is drained out of the total installation, consisting of a developing apparatus and the apparatus according to the present invention, and discharged to the receiver. Subsequently, new fluid is filled into the installation.

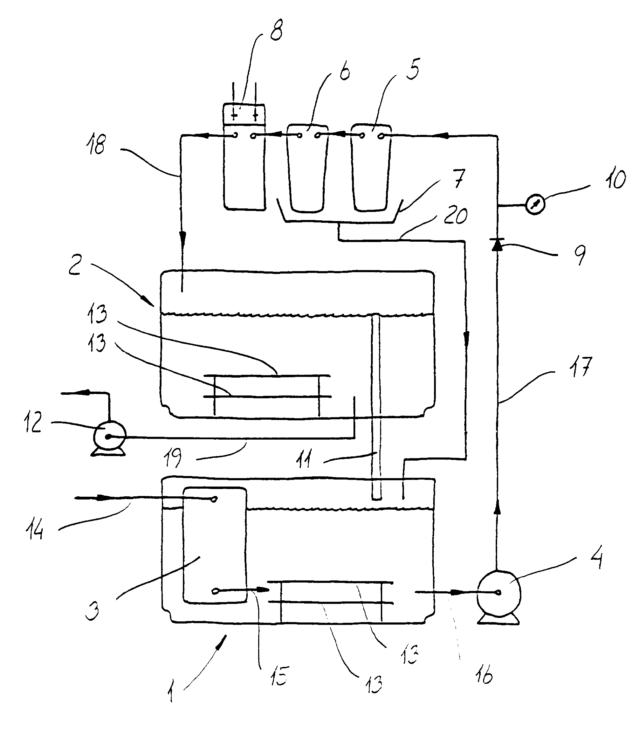

### DESCRIPTION OF THE DRAWING

The invention will now be described in further detail with reference to the attached drawing which shows an embodiment of an apparatus according to the invention.

The apparatus illustrated in the drawing comprises a first reception tank 1, a second reception tank 2, a rough filter 3, a pump 4, a first fine filter 5, a second fine filter 6, a waste tray 7, an UV filter 8, a return valve 9, a flow gauge 10, an overflow pipe 11, an additional pump 12, and aluminium plates 13.

Rinsing fluid from a developing apparatus in a graphic production is led to the apparatus at the inlet 14. The fluid is first led to the rough filter 3, which in the embodiment shown is situated inside the first reception tank 1. Alternatively, the filter may be situated outside the reception tank.

The rough filter 3 may be of several different types. In a preferred embodiment the rough filter consists of a metal gauze filter with a large inner surface for collecting the major impurities in the rinsing fluid.

However, the large inner surface of the rough filter has another function in addition to collecting impurities. Micro-organisms which decompose certain of the organic substances contained in the rinsing fluid will gather on this surface. It is primarily gelatine products in the rinsing fluid that these micro-organisms decompose. Thus, both mechanical and biological purification takes place in the rough filter.

After the fluid has been led through the rough filter 3, it is led into the first reception tank. An outlet 15 from the rough filter 3 to the reception tank 1 ends between two aluminium plates 13.

The aluminium plates 13 are situated in the lower part of the reception tank 1 and are intended for precipitation of any silver that might be dissolved in the rinsing fluid. It will be possible to use a different plate material than aluminium but aluminium yields the highest effect in the present case. The rinsing fluid is then led through an outlet 16 out of the first reception tank 1 and on to a pump 4, preferably a centrifugal pump.

The pump 4 is a relatively powerful pump, e.g. with a pump pressure of 1.8 · 10⁵ Nm² (18 m column of water). Thus the pump is more powerful than a pump (not shown), if any, leading the rinsing fluid from the developing apparatus to the apparatus according to the invention. The pump 4 is so powerful because it must be capable of pressing the rinsing fluid through the subsequent fine filters 5, 6 to which the fluid is pumped via the pipe line 17.

In the embodiment shown, the fine filters 5, 6 consist of two filters, the first filter 5 of which is rougher than the second filter 6. The first filter 5 has a pore size of 40 micrometers whereas the second filter 6 has a pore size of 5 micrometers. These small pore sizes are the ones which necessitate a powerful pump 4 in order that the fluid may be led through the filters. When the fluid has been led through the two fine filters, substantially all macroscopic organisms and other solid matters, mainly gelatine particles, have been filtered out of the fluid. However, a possibility that microscopic organisms are present in the fluid will still remain. These microscopic organisms may be algae and bacteria. If these are not filtered out of the fluid or destroyed, there will be a risk that they grow and/or multiply. This means that within a short time the rinsing fluid will no longer be usable as these organisms will settle on rollers and other parts of the developing apparatus. Therefore, the fluid is led from the fine filters on to a filter 8 with ultraviolet light, a so-called UV-filter.

The UV-filter 8 is of a type with a very strong light. Thus, filters of the type used in the present invention have a luminous capacity equal to the filters used for purifying water, eg. in swimming baths. The UV-filter 8 has a capacity of about 25 mWs/cm² at a light permeability of 90%. This ensures that all present algae and bacteria are destroyed, which means that the formation of such micro-organisms will take place very slowly or be impeded completely. The waste water may consequently be used for a longer period than if the UV-filter was not used. After the waste water has passed the UV-filter 8, it is led via the pipe line 18 to the second reception tank 2.

Like the first reception tank 1, the second reception tank 2 is provided with aluminium plates 13 in the lower part of the tank. The tank 2 is further provided with an overflow 11 which is connected with the first reception tank 1. While the apparatus is operating, rinsing fluid will continuously flow from the second reception tank to the first reception tank. This is due to the fact that the pump 4 in the apparatus according to the invention is more powerful and has a larger pump capacity than the amount of fluid led to the apparatus. This means that the flow of fluid within the apparatus exceeds the flow in and out of the apparatus. Having passed through the second reception tank 2, part of the fluid is led through the outlet 19 and pumped back to the rinsing apparatus by means of the pump 12.

In a preferred embodiment like the one illustrated in the drawing, a return valve 9 and a flow gauge 10 are inserted along the pipe line 17, alternatively along the pipe line 18, from the pump 4 to the second reception tank 2. The flow gauge 10 is used as an indicator when one or both of the fine filters 5, 6 must be replaced. When the flow falls below a certain value, this is an indication that the filters 5, 6 are blocked up. The apparatus is then stopped and the filters are replaced.

In connection with filter replacement, some fluid may be spilt, and therefore a waste tray 7 with a drain 20 to the first reception tank 1 is mounted under the filters 5, 6. Owing to this arrangement, the spilt fluid will be led back to the start of the rinsing process and be subjected to that when new or cleaned filters have been mounted and the apparatus is put back into operation.

In order further to reduce the formation of algae and bacteria, the pump 4 is only running when film is being taken through the developing apparatus to which the apparatus according to the invention is connected. Every time the pump is running, a certain oxidation of the fluid takes place, which is not favourable for minimizing the formation of algae and bacteria. The pump 4 is consequently provided with a control which will start and stop the pump depending on whether or not film is being taken through the developing apparatus. Thus, the pump is only running when necessary and in resting periods when the fluid is not being circulated in the apparatus, the oxidation of the fluid is minimal. In connection with the fact that the fluid is periodically at a standstill, a further advantage is obtained in that the precipitation of silver on the aluminium plates 13 is increased when the fluid is allowed longer lasting contact with the aluminium plates in the reception tanks 1, 2.

The fluid being circulated inside the apparatus according to the invention has, as mentioned, a higher flow than the fluid being circulated to the rinsing apparatus. Depending on the capacity of the developing apparatus used in the graphic production, the relation between the flow of fluid inside the apparatus and fluid to and from the rinsing apparatus will be between 2:1 and 5:1.

The following table lists values of measurements performed on the rinsing fluid in an apparatus according to the invention. The measurements were performed on 85 liters of rinsing water which has been running on 180 m² of film.

| NO. | ANALYSIS | UNIT | RESULT | METHOD |
|---|---|---|---|---|
| 48 | DRY MATTER IN SUSPENDING SUBSTANCES | mg/l | < 5 | DS 207 |
| 27 | GLOW REST IN SUSPENDING SUBSTANCES | mg/l | < 5 | DS 207 |
| 220 | pH | | 7.3 | DS 287 |
| 28 | CHLORIDE | mg/l | 117 | DS 239 |
| 50 | DRY MATTER | mg/l | 2,670 | DS 204 |
| | SODIUM | mg/l | 270 | AAS |
| | SILVER | mg/l | 0.19 | AAS |

Further measurements performed on the rinsing fluid in an installation corresponding to the installation in which the first measurements were performed are listed in the following table. The measurements were performed on 80 liters of rinsing fluid which has been running on 150 m² of film over a period of 5 weeks.

| NO. | ANALYSIS | UNIT | RESULT | METHOD |
|---|---|---|---|---|
| 48 | DRY MATTER IN SUSPENDING SUBSTANCES | mg/l | 38 | DS 207 |
| 27 | GLOW REST IN SUSPENDING SUBSTANCES | mg/l | < 5 | DS 207 |
| 220 | pH | | 6.1 | DS 287 |
| 28 | CHLORIDE | mg/l | 1,450 | DS 239 |
| 198 | DRY MATTER | mg/l | 72,500 | DS 204 |
| 40 | SILVER | mg/l | < 0.1 | AAS |
| 437 | ALUMINIUM | mg/l | 11 | ICP |
| The following analyses were performed outside Danish Accrediting System: | | | | |
| 442 | INHIBITION EC20 | ml/l | 120 | DS 298 |
| 442 | INHIBITION EC50 | ml/l | 220 | DS 298 |

This table also contains measurements of the inhibition which is an expression of the effectiveness of the micro-organisms decomposing the organic substances in the rinsing fluid and of the possibility of subsequent purification of the fluid.

Due to the high level of fluid purification, it is now possible in certain cases to reduce the outlet of fluid to the sewer from 200 m³ per year to approx. 1 m³ per year.

The apparatus according to the invention is described above with reference to one embodiment. However, it will be possible to achieve the object of the invention by using corresponding elements in larger or smaller numbers. It will be possible to use several rough filters, one or several fine filters, and possibly several UV-filters. Furthermore, it will be possible to insert several pumps in the apparatus in order to maintain a given flow through the apparatus or in order to increase the capacity of the apparatus.

## Claims

1. A method of puriflying rinsing fluids used in graphic production, in particular fluids from developing apparatuses polluted by particles of silver residue from the films that have been developed and biological particles such as algae and bacteria, **characterized** in that silver is precipitated from the fluid in a first reception tank (1) using horizontal plates, whereafter the fluid is successively pumped through a filter unit comprising at least one first mechanical filter (5) and at least one second filter (6), said first filter (5) being rougher than the second one (6), and a filter (8) with ultraviolet light, which is arranged between a first reception tank (1) and a second reception tank (2), that the fluid is circulated between said two tanks (1, 2) and that part of the circulating fluid is circulated to the rinsing apparatus from the second reception tank (2).

2. A method according to claim 1, **characterized** in that the fluid is circulated between the two tanks (1, 2) and to the rinsing apparatus periodically and that during the periods when the fluid is not circulated, it is not performing any flow.

3. A method according to claims 1 and 2, **characterized** in that the filter (8) with ultraviolet light is provided with a source of light having an intensity of at least 25 mWs/cm² at a light permeability of 90%.

4. A method according to any of the preceding claims, **characterized** in that the ratio between the part of the fluid circulating between the two reception tanks (1, 2) and the part of the fluid circulating to the rinsing apparatus is between 2:1 and 5:1, preferably 3:1.

5. An apparatus for carrying out the method according to claim 1, said apparatus comprising a first and a second reception tank (1, 2), and in which a pipe connection (16, 17, 18) is provided between the lower part of the first reception tank (1) and the upper part of the second reception tank (2), **characterized** in that a pump (4), a first and a second mechanical filter (5, 6), and a filter (8) with ultraviolet light are inserted in the pipe connection (16, 17, 18), and further comprising horizontal plates as silver precipitation means in the first reception tank and means for circulating part of the fluid from the second reception tank (2) to the first reception tank (1).

6. An apparatus according to claim 5, **characterized** in that aluminium plates (13) are provided in the first reception tank (1) and optionally in the second reception tank (2), that said aluminium plates (13) comprise two plates (13) which are positioned horizontally at a distance from one another for forming a space between the plates (13) and preferably in such a manner that an inlet for the first reception tank (1) has its mouth in the same level as the space between the two aluminium plates (13).

7. An apparatus according to claims 5 and 6, **characterized** in that a mechanical filter in the shape of a rough filter (3) is provided in connection with the first reception tank (1), that said rough filter (3) is provided with an inlet (14) and an outlet (15), that the outlet (15) leads into the first reception tank (1), and that the polluted fluid is led through said rough filter (3) before it is led into the first reception tank (1).

8. An apparatus according to claims 5-7, **characterized** in that the first mechanical filter (5) retains solid matter particles with a size of more than 40 micrometres, and that the second mechanical filter (6) retains solid matter particles with a size of more than 5 micrometres.

9. An apparatus according to claims 5-8, **characterized** in that the pump is a fluid pump (4) and has a pumping capacity of at least 1.8 x 10⁵ Nm² (18 m column of water).

10. An apparatus according to claims 5-9, **characterized** in that also a flow gauge (10) is inserted in the pipe connection (17, 18) between the first and the second reception tank (2).

## Patentansprüche

1. Verfahren zum Reinigen von Spülflüssigkeiten, die in der grafischen Industrie verwendet werden, insbesondere Flüssigkeiten aus Entwicklungsvorrichtungen, die duch Silberrestpartikel von den entwickelten Filmen und durch biologische Partikel, wie Z.B. Algen und Bakterien verunreinigt sind, dadurch gekennzeichnet, daß Silber in einem ersten Aufnahmetank (1) unter Verwendung von horizontalen Platten aus der Flüssigkeit abgeschieden wird, wonach die Flüssigkeit aufeinanderfolgend durch eine Filtereinheit, die mindestens ein erstes mechanisches Filter (5) und mindestens ein zweites Filter (6) enthält, wobei das erste Filter (5) grober ist als das zweite Filter (6), und ein Filter (8) mit Ultraviolettlicht gepumpt wird, das zwischen einem ersten Aufnahmetank (1) und einem zweiten Aufnahmetank (2) angeordnet ist, daß die Flüssigkeit zwischen den beiden Tanks (1, 2) zirkuliert wird und daß ein Teil der zirkulierenden Flüssigkeit aus dem zweiten Aufnahmetank (2) zu der Spülvorrichtung zirkuliert wird.

2. Verfahren nach Anspruch 1, dadurch gekennzeichnet, daß die Flüssigkeit zwischen den beiden Tanks (1, 2) und zu der Spülvorrichtung periodisch zirkuliert wird und daß die Flüssigkeit während der Perioden, in denen die Flüssigkeit nicht zirkuliert wird, keine Fließbewegung ausführt.

3. Verfahren nach Anspruch 1 oder 2, dadurch gekennzeichnet, daß das Filter (8) mit Ultraviolettlicht mit einer Lichtquelle versehen ist, die eine Intensität von mindestens 25 mws/cm² bei einer Lichtdurchlässigkeit von 90% hat.

4. Verfahren nach einem der vorstehenden Ansprüche, dadurch gekennzeichnet, daß das Verhältnis zwischen dem Teil der Flüssigkeit, die zwischen den beiden Aufnahmetanks (1, 2) zirkuliert, und dem Teil der Flüssigkeit, der zu der Spülvorrichtung zirkuliert, zwischen 2:1 und 5:1, vorzugsweise 3:1 ist.

5. Vorrichtung zur Durchführung des Verfahrens nach Anspruch 1, welche Vorrichtung einen ersten und einen zweiten Aufnahmetank (1, 2) enthält, wobei eine Leitungsverbindung (16, 17, 18) zwischen dem unteren Teil des ersten Aufnahmetanks (1) und dem oberen Teil des zweiten Aufnahmetanks (2) vorgesehen ist, dadurch gekennzeichnet, daß eine Pumpe (4), ein erstes und ein zweites mechanisches Filter (5, 6) und ein Filter (8) mit Ultraviolettlicht in die Leitungsverbindung (16, 17, 18) eingesetzt sind, und ferner enthaltend horizontale Platten als Silberabscheideeinrichtung in dem ersten Aufnahmetank und eine Einrichtung zum Zirkulieren eines Teiles der Flüssigkeit von dem zweiten Aufnahmetank (2) zu dem ersten Aufnahmetank (1).

6. Vorrichtung nach Anspruch 5, dadurch gekennzeichnet, daß Aluminiumplatten (13) in dem ersten Aufnahmetank (1) und optional in dem zweiten Aufnahmetank (2) vorgesehen sind, daß die Aluminiumplatten zwei Platten (13) umfassen, die horizontal zueinander beabstandet positioniert sind, so daß sie einen Raum zwischen den Platten (13) bilden, und vorzugsweise in der Art, daß ein Einlaß in den ersten Aufnahmetank (1) die Mündung in der selben Ebene wie der Raum zwischen den beiden Aluminiumplatten (13) hat.

7. Vorrichtung nach Anspruch 5 und 6, dadurch gekennzeichnet, daß ein mechanisches Filter in Form eines Grobfilters (3) in Verbindung mit dem ersten Aufnahmetank (1) vorgesehen ist, welches Grobfilter (3) mit einem Einlaß (14) und einem Auslaß (15) versehen ist, daß der Auslaß (15) in den ersten Aufnahmetank (1) führt und daß die verunreinigte Flüssigkeit durch das Grobfilter (3) geleitet wird, bevor sie in den ersten Aufnahmetank (1) geleitet wird.

8. Vorrichtung nach den Ansprüchen 5 - 7, dadurch gekennzeichnet, daß das erste mechanische Filter (5) Feststoffpartikel mit einer Größe von mehr als 40 Mikrometer zurückhält und daß das zweite mechanische Filter (6) Feststoffpartikel mit einer Größe von mehr als 5 Mikrometer zurückhält.

9. Vorrichtung nach den Ansprüchen 5 - 8, dadurch gekennzeichnet, daß die Pumpe eine Flüssigkeitspumpe (4) ist und eine Pumpleistung von mindestens 1,8 x 10⁵Nm² (18 m Wassersäule) hat.

10. Vorrichtung nach den Ansprüchen 5 - 9, dadurch gekennzeichnet, daß ferner eine Durchflußmeßeinrichtung (10) in die Leitungsverbindung (16, 17) zwischen dem ersten und dem zweiten Aufnahmetank (2) eingesetzt ist.

## Revendications

1. Procédé pour purifier des fluides de rinçage utilisés dans la production graphique, en particulier des fluides d'appareils de développement pollués par des particules de résidu d'argent à partir des films qui ont été développés et par des particules biologiques telles que des algues et des bactéries,
caractérisé en ce que l'argent est précipité à partir du fluide dans un premier réservoir de réception (1) utilisant des plaques horizontales, après quoi le fluide est successivement pompé à travers une unité à filtres comprenant au moins un premier filtre mécanique (5) et au moins un second filtre (6), ledit premier filtre (5) étant plus grossier que le second (6), et un filtre (8) à lumière ultraviolette, qui est agencé entre le premier réservoir de réception (1) et un second réservoir de réception (2), en ce que le fluide est mis en circulation entre lesdits deux réservoirs (1, 2) et en ce que la partie du fluide en circulation circule vers l'appareil de rinçage à partir du second réservoir de réception (2).

2. Procédé selon la revendication 1,
caractérisé en ce que le fluide circule entre les deux réservoirs (1, 2) et vers l'appareil de rinçage périodiquement et an ce que, pendant les périodes où le fluide ne circule pas, il n'est pas réalisé un quelconque écoulement.

3. Procédé selon les revendications 1 et 2,
caractérisé en ce que le filtre (8) à lumière ultraviolette est muni d'une source de lumière ayant une intensité d'au moins 25 mWs/cm² à une perméabilité de lumière de 90 %.

4. Procédé selon l'une quelconque des revendications précédentes,
caractérisé an ce que le rapport entre la partie du fluide circulant entre les deux réservoirs de réception (1, 2) et la partie du fluide circulant vers l'appareil de rinçage est entre 2 :1 et 5 :1, de préférence 3 :1.

5. Appareil pour mettre en oeuvre le procédé selon la revendication 1, ledit appareil comprenant un premier et un second réservoirs de réception (1, 2), et dans lequel une tuyauterie (16, 17, 18) est prévue entre la partie inférieure du premier réservoir de réception (1) et la partie supérieure du second réservoir de réception (2),
caractérisé en ce qu'une pompe (4), un premier et un second filtres mécaniques (5, 6), et un filtre (8) à lumière ultraviolette sont insérés dans la tuyauterie (16, 17, 18), et comprenant de plus des plaques horizontales comme moyens de précipitation de l'argent dans le premier réservoir de réception et des moyens pour faire circuler la partie du fluide du second réservoir de réception (2) vers le premier réservoir de réception (1).

6. Appareil selon la revendication 5,
caractérisé en ce que des plaques d'aluminium (13) sont prévues dans le premier réservoir de réception (1) et éventuellement dans le second réservoir de réception (2), en ce que lesdites plaques d'aluminium (13) comprennent deux plaques (13) qui sont positionnées horizontalement à une distance l'une de l'autre pour former un espace entre les plaques (13) et, de préférence, de telle manière qu'une entrée pour le premier réservoir de réception (1) présente son ouverture au même niveau que l'espace entre les deux plaques d'aluminium (13).

7. Appareil selon les revendications 5 et 6,
caractérisé en ce qu'un filtre mécanique sous la forme d'un filtre grossier (3) est prévu en relation avec le premier réservoir de réception (1), en ce que ledit filtre grossier (3) est muni d'une entrée (14) et d'une sortie (15), en ce que la sortie (15) mène dans le premier réservoir de réception (1), et en ce que le fluide pollué est mené à travers ledit filtre grossier (3) avant qu'il soit mené dans le premier réservoir de réception (1).

8. Appareil selon les revendications 5 - 7,
caractérisé en ce que le premier filtre mécanique (5) retient des particules de matière solide ayant une taille supérieure à 40 micromètres et en ce que le second filtre mécanique (6) retient des particules de matière solide ayant une taille supérieure à 5 micromètres.

9. Appareil selon les revendications 5 - 8,
caractérisé en ce que la pompe est une pompe à fluide (4) et présente une capacité de pompage d'au moins 1,8 x 10⁵ Nm² (18 m de colonne d'eau).

10. Appareil selon les revendications 5 - 9,
caractérisé en ce que, également, une jauge de débit (10) est insérée dans la tuyauterie (17, 18) entre le premier et le second réservoirs de réception (2).
